Europäisches Patentamt

European Patent Office

Office européen des brevets

(11) Publication number: **0 394 199**
**A1**

## EUROPEAN PATENT APPLICATION

(21) Application number: **90830026.2**

(22) Date of filing: **25.01.90**

(51) Int. Cl.5: **A01G 27/00**

(30) Priority: **25.01.89 IT 331989**

(43) Date of publication of application:
**24.10.90 Bulletin 90/43**

(84) Designated Contracting States:
**DE ES FR GB NL**

(71) Applicant: **Sommariva, Piero**
**Via degli Ortolani, 7**
**Bologna(IT)**

(72) Inventor: **Sommariva, Piero**
**Via degli Ortolani, 7**
**Bologna(IT)**

(74) Representative: **Dall'Olio, Giancarlo**
**INVENTION s.n.c. Via Arienti 26**
**I-40124 Bologna(IT)**

(54) Device for the automatic irrigation of cultures.

(57) The device allows to irrigate, in an automatic way, cultures of various kinds according to predetermined and adjustable amounts of liquid at intervals of time depending on temperature, degree of humidity and ventilation of air in the environment where the same device is placed.

The device presented can be made at a low cost, is functional, reliable and requires almost no servicing, furthermore, it can be usefully combined with known irrigation plants to start and to stop them depending on air temperature, humidity and ventilation values.

Fig. 2

# DEVICE FOR AUTOMATIC IRRIGATION OF CULTURES

As it is known, the optimal irrigation of cultures has to provide soil with the right degree of humidity, depending on special requirements of various plants.

In order to keep the aforesaid degree of humidity as constant as possible, it is necessary to vary the frequency of irrigation, according to the climatic conditions of the surrounding environment; in fact, when temperature, humidity and air ventilation are varying, the velocity of evaporation of water contained in soil varies as well.

This problem is particularly felt in the case of home plants, cultivated in flowerpots or little gardens, in which case it may result to be difficult to ensure the necessary control, especially if the owners are away from home.

The device, being the subject of this invention, is aimed at allowing plants cultivated in flowerpots or in the soil to be irrigated with amounts of water which can be predetermined and adjusted, according to variable intervals of time depending on the environment climatic conditions, with a totally automatic adjustment to any variation of the latter.

Furthermore, the device being the subject of this invention is characterized by a particular simplicity of construction, thus involving a total low cost, which, together with the features of absolute reliability, no servicing needed, easy adjustment to various conditions of use, makes it extremely useful.

The above is obtained through the invention made in accordance with the claims below.

The features of the invention referred to above, are pointed out below, with a special reference to the drawings attached herewith, where:

- figures no. 1 and 2 show a schematic view of the device, in the two characteristic phases of each operating cycle;
- figures no. 3 and 4 show a variation of the device.

With reference to said figures, a vertical support panel is indicated by 1, with which, in order from above downwards, a shelf 2, a horizontal shaft 3 and two stops 4 and 5, respectively first and second, are integral.

The shelf 2 supports a tank 6, containing water or another suitable liquid, while the horizontal shaft 3 supports a swinging element 7, mounted so that it can revolve, placed beneath the tank 6.

The aforesaid element 7 is consisting of a vertical wall 17, a basin 18 and a housing 19, made in a single body, with said basin and housing placed, on opposite sides, beside the said wall 17, next to which, in a suitable position, the link with said shaft 3 is also provided for.

The aforesaid housing 19 is inclined, to define an acute angle as to the wall 17, and houses a balance weight 20 (for instance a sphere, a cylinder or a cylindrical hollow body containing liquid), suited to roll freely inside the same housing.

Next to the outlet of said basin 18 a strip 30 is fastened, made of a material suited to absorb said liquid.

A conveyor 8, made of a flexible pipe in this case, coming out of the tank 6, has its end 8a fastened to the upper end 17a of said wall 17, so to allow, if it is not throttled, the downflow of water from the same tank 6 to said basin 18.

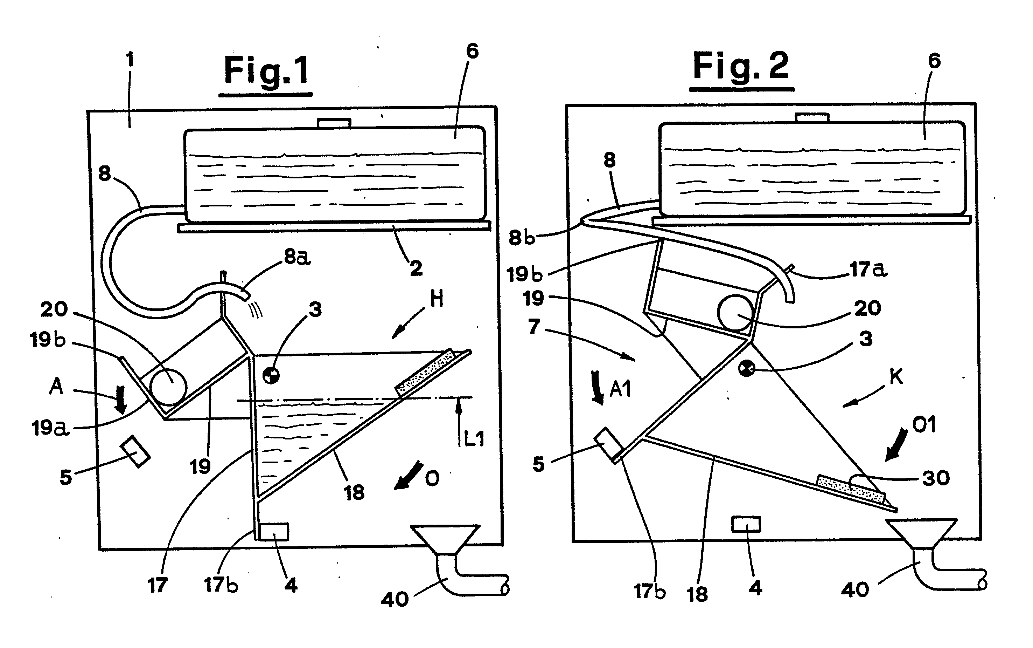

Each operating cycle of the aforesaid device consists of two phases, in the first of which (figure 1) the swinging element 7 is in a loading position H, and in the second one the same element 7 is in an unloading position K (figure 2).

The element 7 is kept in the loading position H through the effect of the moment A, directed counterclockwise, caused by the balance weight 20 which, as a consequence of said inclination of the housing 19, results to be resting on the outer limit stop 19a of the ltter: said moment A is held up by the first stop 4 intercepted by the lower end 17b of said wall 17.

With the element 7 in the aforesaid loading position H, the downflow of water from the tank 6 to the basin 18 is allowed.

The liquid weight, acting on the opposite side of the element 7 with respect to the balance weight 20, causes a moment O, directed clockwise, thus opposed to the moment A; the value of said moment O results to be progressively increasing, with reference to the progressive increase of liquid level inside the basin 18.

When a predetermined level L1 of liquid is exceeded, the moment O, having reached a higher intensity than the moment A, causes the swinging of the element 7, which shifts from the loading position H to the unloading position K; such swinging is stopped by said lower end 17b of the wall 17 striking against the second stop 5.

In the unloading position K, the water contained in the basin 18 flows down and is collected by means 40 which provide for sending it to the cultures which are to be irrigated, not shown; in the same time, an appendix 19b provided in the outer wall of the housing 19 intercepts the flexible pipe 8 which, as a consequence,is bent on itself, so bringing about a throttling 8b which cuts off the flow of water towards the basin 18.

Because of the above-mentioned swinging, the housing 19 is moved to such a position that its inclination, with respect to the horizontal line, results to be contrary to the inclination taken on in the loading position H; consequently, the balance weight 20 is caused to roll, inside the same housing 19, towards the wall 17, and stops against the latter.

The value of said moment A, determined by the balance weight 20, decreases until it reaches a minimum value A1, as a consequence of the decrease of the lever arm existing between the same balance weight 20 and the horizontal shaft 3.

While water flows down from the basin 18 to the means 40, a certain amount of said water is absorbed and retained by the strip 30: the increase in weight involved for the latter causes a clockwise moment O1 having a higher intensity than the counterclockwise moment A1: as a consequence, the element 7 is kept in the unloading position K.

The water absorbed by the strip 30 evaporates at a variable speed depending on climatic conditions of the surrounding environment, i.e., as already mentioned in the introduction, as a function of temperature, humidity and intensity of air ventilation.

The water evaporated from the strip 30 causes the value of sad moment O1 to decrease progressively.

After that the equilibrium condition has been passed, the intensity of the moment A1 prevails, with a consequent swinging of the element 7 back again to the loading position H.

It is to be noticed that, during this second swinging, the intensity of the moment A1 is progressively increasing as a result of the increase of the lever arm mentioned above, until it reaches again the value of the moment A in the same instant when, due to said swinging, the housing 19 is again inclined downwards, with a consequent rolling of the balance weight 20 which goes to rest against the outer limit stop of the same housing.

At the same time, the flexible pipe 8, no longer throttled, allows the downflow of more water from the tank 6 to the basin 18, so starting a new cycle.

It is to be pointed out that the throttling 8b disappears gradually not in phase with the start of counterclockwise swinging of the element 7, but after a predetermined angle initially described by the latter (e.g. 20-30 degrees); this is advantageous, since, by delaying the flow of water into the basin 18, the shift of the element 7 from the position K to the position H is made quicker.

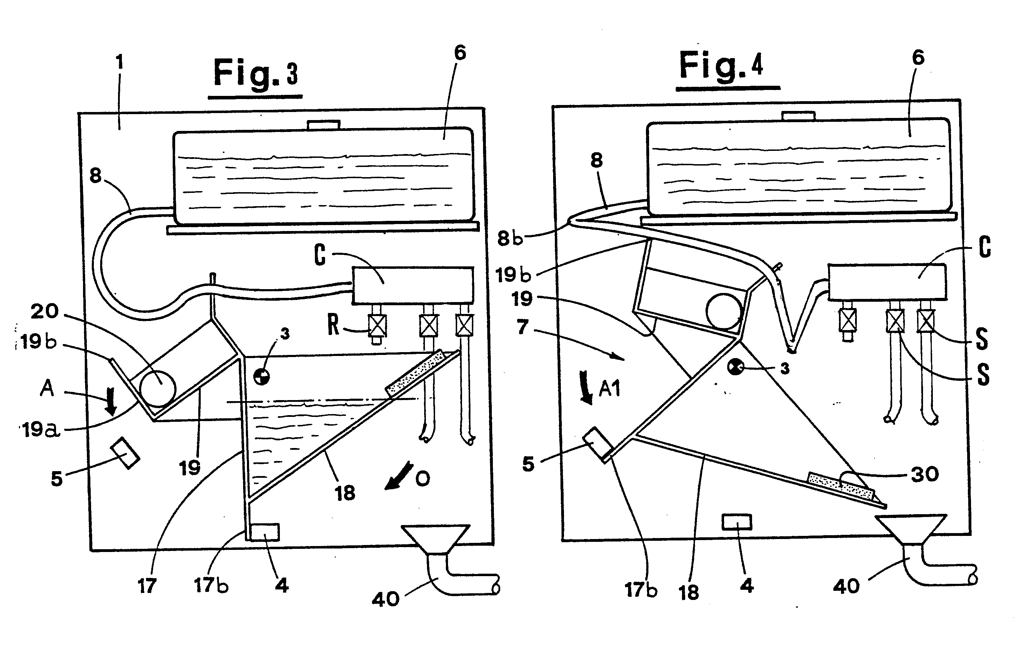

In a constructive variation, shown by figures 3 and 4, the flexible pipe 8 does not deliver water directly to the basin 18, but to a manifold C, integral with the support panel, from which some pipes are branching off, each of them being provided with a stopcock S, to supply the cultures with water directly and individually, as well as a tube, provided with a tap R, to feed the basin 18.

The amount of water which is accumulated in the basin 18 to cause the element 7 to swing has a fixed value, since it depends on the moment A of the balance weight 20.

However, owing to the presence of the tap R, such amount of water may be accumulated at different intervals of time which can be selected as one wishes. At the same intervals of time also the direct irrigation of individual cultures takes place, each of them being regulated, in terms of amount of water, by the relative stopcock S.

In this way, a double advantage is obtained, with the possibility of delivering considerable amounts of water at every cycle, while limiting the automatic irrigation device to low values, and of regulating the amounts of water for individual cultures according to their requirements.

In a constructive variation, not illustrated, the flexible pipe 8 features a solenoid valve, whose opening can be actuated, e.g. by an electric microswitch (or by a suitable sensor) placed on the stop 4, actuated by the lower end 17b of the wall 17 when the element 7 is in the loading position.

It is easily understandable, from the above, that the main feature of the invention referred to is the totally automatic adjustment of each operating cycle to the environmental climatic conditions which affect the evaporation rate of the soil where the cultures are placed.

If said cultures, together with the device, are outdoors, the latter is able to regulate the irrigation intervals properly even in case of rain, which, keeping the strip 30 soaked, prevents the element 7 from shifting to the loading position H.

The device may also be used, combined with overhead irrigation plants, as a variable timer for actuation of the same plant according to the procedure described above; in that case, the basin may be fed either by the water ejected by the terminal sprinkler heads of the plant, or through a suitable offtake from the feed piping of such plant; in both cases a sensor (combined with the stop 5) for detecting the unloading position K of the swinging element 7 provides for controlling suitable intercepting means (e.g. a solenoid valve) placed along the feed piping of the irrigation plant referred to.

By varying the mass of the balance weight 20, (e.g. in the case of a cylindrical hollow counterweight containing liquid, it is sufficient to vary the mass of the latter), it is possible to regulate the amount of liquid flowing into the means 40 whenever the basin is emptied, and finally, by varying the volume of the strip 30, it is possible to regulate, the climatic conditions being equal, the interval of time during which the swinging element 7 remains in the unloading position K.

## Claims

1) Device for the automatic irrigation of cultures, characterized in that it includes: a support (1) with which a horizontal shaft (3) and two stops (4,5), respectively first and second, are integral; a swinging element (7), supported in a revolving mount by said shaft (3), provided with a basin (18), with the possibility for said element (7) to swing from a loading position (H) to an unloading position (K), and vice versa, defined by the striking of the same element respectively against said first and second stops (4,5); a conveyor (8), at least desactivated when said swinging element (7) is in the unloading position (K), having the purpose, when actuated, of conveying liquid from a source of liquid to said basin (17); first means (19,20), suited to keep said swinging element (7) in the loading position (H) until a predetermined level (L1) of liquid in said basin is reached, and also suited to easily allow the shift of the swinging element (7) from the loading position (H) to the unloading position (K) as a consequence of said prefixed liquid level in the basin (18) being exceeded; second means (30), combined with said basin (18), operating in contrast with said first means, having the purpose of keeping said swinging element (7) in the unloading position (K) for an interval of time dependent upon humidity, temperature and ventilation of air in the environment where the same second means are placed; third means (40), having the purpose of receiving the liquid flowing from said basin (18), and sending the same liquid to the cultures to be irrigated.

2) Device as in claim 1, characterized in that said source of liquid consists of a tank (6), containing liquid, resting upon a shelf (2), integral with said support (1) and placed over said shaft (3), whereas said conveyor (8) consist of a flexible pipe, coming out from said tank (6), with an end (8a) fastened to said element (7) and having its outlet over said basin, said pipe resulting to be free with the same element (7) in loading position, or bent on itself through an appendix (19b) made in said swinging element (7) with the latter in unloading position (K), so causing a throttling (8b) in the same pipe, to intercept the flow of liquid from the tank to the basin.

3) Device as in claim 2, characterized in that the liquid conveyed by the pipe (8) is sent only partially and through the stopcock (R) into the basin (18), while the remaining liquid is directly delivered to the various cultures, individually regulated by as many stopcocks (S).

4) Device as in claim 1, characterized in that said first means are consisting of a balance weight (20), freely placed in a housing (19) made in said swinging element (7) on the opposite side as to the basin (18) with respect to said shaft (3), the same housing resulting to be, as a consequence of the oscillations of the swinging element (7), inclined downwards or upwards, towards its outer stop limit (19a), respectively with the element (7) in loading position (H) and in unloading position (K), said inclinations determining corresponding positions of the balance weight (20), in which the moment exercised by itself on the aforesaid element (7) varies from a maximum value (A) to a minimum value (A1).

5) Device as in claim 1, characterized in that said second means consist of a strip (30), made of absorbing material and fastened onto said basin (18), so to be involved at least during the unloading from the latter of the same liquid, said strip causing on said swinging element (7) a moment (O1) which, from a maximum value due to the soaking up of said liquid, decreases progressively due to the evaporation of water contained in itself up to a minimum value which allows the shift of said swinging element (7) from the loading position (H) to the unloading position (K).

6) Device as in claim 1, **characterized in that** said balance weight (20) consists of a hollow body, having a circular section, containing liquid in a variable amount depending on predetermined values of said moments (A, A1).

7) Device as in claim 1, characterized in that said conveyor (8) consists of a pipe connecting said source of liquid with said basin, said pipe featuring intercepting means controlled by a sensor detecting the unloading position (K) of said swinging element.

8) Device as in claim 7, characterized in that said source consists of the feeding duct of an irrigation plant and said pipe is an offtake from said duct.

9) Device as in claim 1, characterized in that said source consists of the liquid sprayed by the terminal sprinklers of an outdoors irrigation plant, with intercepting means placed along the feeding duct of said plant and controlled by a sensor detecting the unloading position (K) of said swinging element (7).

10) Device as in claim 1, characterized in that said conveyor (8) consists of a pipe connecting said source of liquid with said basin, with said pipe featuring intercepting means controlled directly or indirectly by the oscillation of the swinging element (7).

**Fig.1**

**Fig.2**

EP 0 394 199 A1

Fig.4

Fig.3

EP 0 394 199 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 327 587 (DEUTSCHE SEMPERIT)<br>* Page 1, paragraph 1; page 2, paragraph 4 - page 4; page 7, figure * | 1,5 | A 01 G 27/00 |
| Y | | 9 | |
| A | | 4,7,10 | |
| | --- | | |
| Y | FR-A- 797 176 (RIOLET)<br>* Page 1, lines 1-37; figures 1,2 * | 9 | |
| | --- | | |
| A | EP-A-0 245 149 (GEROME)<br>* Page 1, line 23 - page 3, line 30; page 4, line 34 - page 5, line 6; page 6, line 11 - page 7, line 10; figures 1-4 * | 1,4,5 | |
| | --- | | |
| A | FR-A-2 358 101 (LAHR)<br>* Page 1, line 29 - page 2, line 5; page 5, figure * | 1,2 | |
| | ----- | | |

TECHNICAL FIELDS SEARCHED (Int. Cl.5)

A 01 G

The present search report has been drawn up for all claims

| Place of search | Date of completion of the search | Examiner |
|---|---|---|
| THE HAGUE | 27-04-1990 | PERNEY Y.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)